(19) **Europäisches Patentamt**

**European Patent Office**

**Office européen des brevets**

(11) **EP 1 724 688 A1**

(12) **EUROPÄISCHE PATENTANMELDUNG**

(43) Veröffentlichungstag:
    **22.11.2006 Patentblatt 2006/47**

(51) Int Cl.:
    ***G06F 11/36*** *(2006.01)*

(21) Anmeldenummer: **05010816.6**

(22) Anmeldetag: **19.05.2005**

(84) Benannte Vertragsstaaten:
    **AT BE BG CH CY CZ DE DK EE ES FI FR GB GR
    HU IE IS IT LI LT LU MC NL PL PT RO SE SI SK TR**
    Benannte Erstreckungsstaaten:
    **AL BA HR LV MK YU**

(71) Anmelder: **Bayerische Motoren Werke
    Aktiengesellschaft
    80809 München (DE)**

(72) Erfinder:
    • **Salzmann, Christian
      80634 München (DE)**
    • **Kistler, Günter
      85283 Wolznach (DE)**

(54) **Verfahren zur automatisierten Überprüfung einer Bedienstruktur**

(57)    Bei einem Verfahren zur automatisierten Überprüfung der Bedienbarkeit einer multimodalen Bedienstruktur auf die Erfüllung vorgegebener Bedienkriterien, mit den Schritten:
- Abbilden der multimodalen Bedienstruktur in einen durch ein computerimplementiertes Überprüfungsverfahren verarbeitbaren endlichen Zustandsautomaten und Übergeben des Zustandsautomaten an das Überprüfungsverfahren und
- Ausdrücken der Bedienkriterien als durch das computerimplementierte Überprüfungsverfahren verarbeitbare Prüfformeln und Übergeben der Prüfformeln an das Überprüfungsverfahren

wird die multimodale Bedienstruktur in einen nicht transitionsbasierten Zustandsautomaten abgebildet, welcher eine Vielzahl von Teilautomaten umfasst, welche jeweils zumindest eine für die Überprüfung der Bedienbarkeit der Bedienstruktur relevante Abfolge von Bedienschritten abbilden.

**Fig. 2**

**Beschreibung**

Die Erfindung betrifft ein Verfahren zur automatisierten Überprüfung der Bedienbarkeit einer multimodalen Bedienstruktur auf die Erfüllung vorgegebener Bedienkriterien.

Die Vielzahl der Funktionen moderner technischer Systeme und Fortschritte auf dem Gebiet der Bedienschnittstellen zwischen Mensch und System haben dazu geführt, dass einerseits von einer direkten Anwahl sämtlicher Funktionen eines Systems teilweise zu einer hierarchischen Gliederung der Funktionen in Menüpunkte übergegangen wurde und andererseits der Bediener verschiedene Möglichkeiten hat, mit dem System zu interagieren. Das Ergebnis dieser Entwicklungen sind multimodale Bedienstrukturen, insbesondere menübasierte multimodale Bedienstrukturen, wie sie etwa in modernen Kraftfahrzeugen Einsatz finden.

Eine multimodale Bedienstruktur zeichnet sich dadurch aus, dass bestimmte Funktionen auf sehr unterschiedliche Art und Weise ausgelöst werden können (z.B. durch funktionsbezogene Drucktaster, Dreh-/Druckknöpfe, Touchpads, Sprach-/Gesteneingabe). Eine menübasierte Bedienstruktur zeichnet sich durch Gliederung der Funktionen in Menüs und Menüpunkte aus.

Typischerweise wird bei einer menübasierten multimodalen Bedienstruktur durch das Auslösen einer Funktion in einigen Fällen der aktuell ausgewählte, evtl. auf einem optischen Display textuell und/oder grafisch dargestellte, Menüpunkt verändert, in anderen Fällen bleibt der zuvor ausgewählte Menüpunkt aktiv.

Die Bedienbarkeit einer multimodalen Bedienstruktur (etwa für ein zentrales Kontrollsystem mit multimodaler Bedienschnittstelle in einem Kraftfahrzeug) wird typischerweise beurteilt anhand von Bedienkriterien für die Anzahl und/oder Art der Bedienaktionen, welche erforderlich sind, um einen bestimmten Menüpunkt zu erreichen (z. B. "Der aktuelle Radiosender muss in jedem Zustand des Systems mit maximal drei Bedienschritten speicherbar sein.").

Gemäß dem Stand der Technik werden solche Bedienkriterien entweder manuell am System überprüft oder die multimodale Bedienstruktur wird in einem logischen Modell abgebildet und anhand des Modells überprüft.

Der Aufwand einer manuellen Überprüfung ist insbesondere dann sehr hoch, wenn ein Bediensystem mit einer Vielzahl von Zuständen zu überprüfen ist. Für ein modernes multimodales Bediensystem ist eine vollständige und fehlerfreie manuelle Überprüfung daher nicht mit vertretbarem Aufwand zu bewerkstelligen.

Eine aus dem Stand der Technik bekannte Variante eines logischen Modells, anhand dessen ein Bediensystem überprüft werden kann, sind transitionsbasierte Zustandsautomaten, d. h. Zustandsautomaten, deren Zustandsübergänge an Transitionsbedingungen geknüpft sind (z. B. Petri-Netz).

Bei der Modellierung einer Bedienstruktur durch einen transitionsbasierten Zustandsautomaten wird typischerweise jedem Zustand der Bedienstruktur ein einziger Zustand des Zustandsautomaten fest zugeordnet. Mögliche Bedienschritte eines Bedieners stellen typischerweise die Transitionsbedingungen dar.

Generelle Kriterien wie die bloße Erreichbarkeit aller Zustände lassen sich an einem solchen transitionsbasierten Zustandsautomaten durch Standard-Algorithmen abprüfen. Die Überprüfung der Bedienkriterien hingegen erfolgt gemäß dem Stand der Technik für jedes zu überprüfende Bedienkriterium durch einen dedizierten, d. h. kriterienspezifischen, Suchalgorithmus. Ein solcher Suchalgorithmus durchsucht den Zustandsautomaten beispielsweise hinsichtlich Möglichkeiten, einen bestimmten Zustand von einem oder mehreren anderen Zuständen aus durch das Einprägen bestimmter Ereignisse zu erreichen. Die eingeprägten Ereignisse führen dabei im Zustandsautomaten zum Schalten bestimmter Transitionen. Nachteilig an einer solchen Vorgehensweise ist, dass für jedes zu überprüfende Bedienkriterium ein eigener dedizierter Suchalgorithmus implementiert werden muss.

Besonders nachteilig wirkt sich dies im industriellen Umfeld aus, wo die Überprüfung eines Systems häufig personell von der Entwicklung von Werkzeugen zu dessen Überprüfung entkoppelt ist. Die nachträgliche Veränderung oder Erweiterung eines Bedienkriteriums und/oder die Veränderung oder Ergänzung eines Katalogs von Bedienkriterien um ein zusätzliches Bedienkriterium, dessen Überprüfung zuvor nicht vorgesehen war, erfordert einerseits die nachträgliche Entwicklung der entsprechenden Suchalgorithmen. Andererseits ist sie im Fall der angesprochenen personellen Entkopplung mit erheblichen organisatorischen und logistischen Problemen verbunden, da der mit der Überprüfung befasste Personenkreis nachträgliche Veränderungen oder Erweiterungen eines Bedienkriteriums und/oder die Veränderung oder Ergänzung eines Katalogs von Bedienkriterien nicht selbstständig vornehmen kann.

Aufgabe der Erfindung ist es, ein Verfahren zur Überprüfung der Bedienbarkeit einer multimodalen Bedienstruktur zu schaffen, welches eine möglichst einfache Überprüfung von Bedienkriterien erlaubt.

Die Aufgabe wird gelöst durch ein Verfahren zur automatisierten Überprüfung der Bedienbarkeit einer multimodalen Bedienstruktur auf die Erfüllung vorgegebener Bedienkriterien mittels eines computerimplementierten Überprüfungsverfahrens mit den Schritten

- Abbilden der multimodalen Bedienstruktur in einen durch das computerimplementierte Überprüfungsverfahren verarbeitbaren endlichen Zustandsautomaten und Übergeben des Zustandsautomaten an das Überprüfungsverfahren; und

- Ausdrücken der Bedienkriterien als durch das computerimplementierte Überprüfungsverfahren verarbeitbare Prüfformeln und Übergeben der Prüfformeln an das Überprüfungsverfahren,

bei welchem die multimodale Bedienstruktur in einen nicht transitionsbasierten Zustandsautomaten abgebildet wird, der eine Vielzahl von Teilautomaten umfasst, welche jeweils zumindest eine für die Überprüfung der Bedienbarkeit der Bedienstruktur relevante Abfolge von Bedienschritten abbilden.

Ein erfindungsgemäßes Verfahren unterscheidet sich von einem Verfahren gemäß dem Stand der Technik darin, dass als Zustandsautomat zur Modellierung der multimodalen Bedienstruktur ein nicht transitionsbasierter Zustandsautomat verwendet wird, welcher eine Vielzahl von Teilautomaten umfasst, die jeweils zumindest eine für die Überprüfung der Bedienbarkeit der Bedienstruktur relevante Abfolge von Bedienschritten abbilden. Gegenüber einem Verfahren gemäß dem Stand der Technik wird also nicht jedem Zustand der Bedienstruktur ein einziger Zustand des Zustandsautomaten fest zugeordnet. Auch werden keine Bedingungen für die Transition zwischen zwei Zuständen des Zustandsautomaten vorgesehen.

Stattdessen werden sämtliche für die Überprüfung der Bedienbarkeit der Bedienstruktur relevanten Abfolgen von Bedienschritten des Benutzers bei der Abbildung der Bedienstruktur auf den Zustandsautomaten, d. h. bei der Entwicklung des Zustandsautomaten, berücksichtigt. Somit wird erfindungsgemäß eine Vielzahl von Teilautomaten des Zustandsautomaten entwickelt. Jeder relevanten Abfolge von Bedienschritten entspricht dann genau ein solcher Teilautomat. Alle entwickelten Teilautomaten zusammen bilden den Zustandsautomaten.

Ein wesentlicher Vorteil eines erfindungsgemäßen Verfahrens besteht darin, dass zur Überprüfung des entwickelten Zustandsautomaten auf die Erfüllbarkeit vorgegebener Bedienkriterien ein einheitliches computerimplementiertes Überprüfungsverfahren angewendet werden kann, welches von den zu überprüfenden Bedienkriterien unabhängig ist. Das genaue Zustandekommen dieses Vorteils und die hierzu erforderlichen technischen Merkmale des Verfahrens werden im Folgenden noch weiter erläutert.

Da in einem erfindungsgemäßen Verfahren ein nicht transitionsbasierter Zustandsautomat in seinen Teilautomaten typischerweise verschiedene Abfolgen von Zuständen der Bedienstruktur abbildet, welche sich aus verschiedenen Abfolgen von Bedienschritten ergeben, sind jedem Zustand der Bedienstruktur typischerweise mehrere Zustände des nicht transitionsbasierten Zustandsautomaten zuordenbar. Hingegen ist jeder Zustand des Zustandsautomaten eindeutig einem Zustand der multimodalen Bedienstruktur zuordenbar.

Bevorzugt ist jeder Zustand eines Zustandsautomaten, in welchen eine Bedienstruktur erfindungsgemäß abgebildet wird, anhand von Parametern, welche diesem Zustand zugeordnet sind, eindeutig dem entsprechenden Zustand der multimodalen Bedienstruktur zuordenbar.

Vorzugsweise beschreiben die Parameter eines Zustands des Zustandsautomaten neben dem entsprechend zuordenbaren Zustand der Bedienstruktur noch einen gemäß der zugrundeliegenden Abfolge von Bedienschritten in diesem Zustand ausgeführten Bedienschritt.

Die Position eines Zustands des Zustandsautomaten innerhalb des Zustandsautomaten beschreibt unter anderem, welche Bedienschritte zum Erreichen des entsprechenden Zustands der Bedienstruktur führen können.

Ferner kann von der Position eines Zustands des Zustandsautomaten zusammen mit den Parametern und Positionen aller Zustände, von welchen aus dieser Zustand durch Zustandsübergänge erreicht werden kann, auf mindestens eine bestimmte Abfolge von Bedienschritten der multimodalen Bedienstruktur geschlossen werden, durch welche der entsprechende Zustand der Bedienstruktur erreichbar ist.

Jeder Zustand eines erfindungsgemäß entwickelten Zustandsautomaten hat höchstens einen definierten Nachfolgezustand.

Den Zuständen des entwickelten Zustandsautomaten können gemäß einer vorteilhaften Weiterbildung der Erfindung weitere Parameter zugeordnet und in dem Zustandsautomaten abgelegt werden. Solche weitere Parameter eines Zustands können erfindungsgemäß nähere Informationen zu dem entsprechenden, diesem Zustand zugeordneten, Zustand der multimodalen Bedienstruktur oder nähere Informationen zu einem zum Erreichen dieses Zustands oder eines Nachfolgezustands ausgeführten Bedienschritt enthalten. Eine solche nähere Information kann z. B. der mit einem Bedienschritt verbundene Ablenkungsgrad sein.

Die Verarbeitung der einem Zustand des Zustandsautomaten zugeordneten Parameterkann in einfacher Weise zum Gegenstand der Überprüfung eines Bedienkriteriums gemacht werden. Beispielsweise kann somit sehr einfach ein Aufsummieren der Ablenkungsgrade aller Bedienschritte in einer Abfolge von Bedienschritten realisiert werden.

Als nicht transitionsbasierter Zustandsautomat für ein erfindungsgemäßes Verfahren eignet sich insbesondere eine so genannte Kripke-Struktur (beispielsweise bekannt aus: Clarke, Grumberg, Peled "Model Checking", MIT Press, 3. Auflage, 2001) bzw. ein auf Kripke-Strukturen basierender Zustandsautomat.

Bevorzugt dient jeweils genau eine Kripke-Struktur als Teilautomat, in welchen eine bestimmte Abfolge von Bedienschritten einer Bedienstruktur abgebildet wird. Ein aus solchen Teilautomaten zusammengesetzter Zustandsautomat wird im Folgenden als auf Kripke-Strukturen basierender Zustandsautomat einer Bedienstruktur bezeichnet.

Zur Überprüfung wird dementsprechend bevorzugt ein computerimplementiertes Überprüfungsverfahren verwendet, welches zur Verarbeitung nicht transitionsbasierter Zustandsautomaten, insbesondere zur Verarbeitung von Kripke-Strukturen bzw. auf Kripke-Strukturen basierender Zustandsautomaten, geeignet ist.

Im Folgenden wird davon ausgegangen, dass bei der Entwicklung des Zustandsautomaten jede einzelne mögliche und/oder für die Überprüfung der Bedienbarkeit einer Bedienstruktur relevante Abfolge von Bedienschritten in eine eigene Kripke-Struktur umgesetzt wird.

Sofern alle möglichen und/oder für die Überprüfung der Bedienbarkeit der multimodalen Bedienstruktur relevanten Abfolgen von Bedienschritten bekannt sind, kann ein eventuell bereits bestehender transitionsbasierter Zustandsautomat der Bedienstruktur eindeutig, unter bestimmten Umständen automatisiert, in einen nicht transitionsbasierten Zustandsautomat der Bedienstruktur, insbesondere in eine Kripke-Struktur oder einen auf Kripke-Strukturen basierenden Zustandsautomaten, überführt werden.

Der transitionsbasierte Zustandsautomat wird dabei gewissermaßen unter Annahme einer Vielzahl möglicher Abfolgen von Bedienschritten entflochten. Wegen der in der Regel großen Anzahl möglicher Abfolgen von Bedienschritten besitzt ein entsprechender nicht transitionsbasierter Zustandsautomat gegenüber einem transitionsbasierten Zustandsautomaten in der Regel eine wesentlich höhere Anzahl von Zuständen.

Im Gegensatz zu einem transitionsbasierten Zustandsautomaten kann die Überprüfung der Eigenschaften eines nicht transitionsbasierten Zustandsautomaten jedoch in vereinfachter Weise durch ein einheitliches Überprüfungsverfahren erfolgen. Insbesondere für Kripke-Strukturen und auf Kripke-Strukturen basierende Zustandsautomaten existieren als Implementierung eines solchen Überprüfungsverfahrens sehr mächtige Software-Werkzeuge, so genannte Modelchecker, welche geeignet sind, anhand von Prüfformeln bestimmte Eigenschaften der vorliegenden Kripke-Strukturen zu überprüfen.

Gemäß einer vorteilhaften Weiterbildung der vorliegenden Erfindung wird dementsprechend als computerimplementiertes Überprüfungsverfahren ein so genanntes Modelchecking-Verfahren herangezogen.

Sofern die Prüfformeln in einer bestimmten von dem Modelchecker verarbeitbaren Form vorliegen, kann die Überprüfung der Eigenschaften unabhängig vom Inhalt der Prüfformel durch ein und denselben Modelchecker erfolgen.

Zum Überprüfen eines Bedienkriteriums muss dieses lediglich in die oben angesprochene von dem Überprüfungsverfahren, hier dem Modelchecker, verarbeitbare Form einer Prüfformel gebracht werden, welche anschließend an das Überprüfungsverfahren übergeben wird. Hierzu müssen die Prüfformeln einer gemeinsamen Syntax und Semantik entsprechen, so dass diese durch das Überprüfungsverfahren verarbeitbar sind.

Gemäß einer besonders vorteilhaften Ausführungsform der Erfindung werden die Bedienkriterien als so genannte temporallogische Formeln ausgedrückt. Die Verwendung temporallogischer Formeln als Prüfformeln für Modelchecker ist beispielsweise bekannt aus: Clarke, Grumberg, Peled "Model Checking", MIT Press, 3. Auflage, 2001.

Die Mehrzahl typischer Bedienkriterien für typische multimodale Bedienstrukturen, insbesondere für die Bedienstruktur eines zentralen Kontrollsystems mit multimodaler Bedienschnittstelle in einem Kraftfahrzeug, lassen sich mit geringem Aufwand in temporallogische Formeln umformen. Die hierbei anzuwendende Semantik temporallogischer Formeln ist beispielsweise der bereits genannten Quelle Clarke, Grumberg, Peled "Model Checking", MIT Press, 3. Auflage, 2001 zu entnehmen.

Ein wesentlicher Vorteil eines erfindungsgemäßen Verfahrens liegt darin, dass die nachträgliche Veränderung oder Ergänzung eines Katalogs von Bedienkriterien sehr einfach erfolgen kann, da ein verändertes oder hinzugekommenes Bedienkriterium lediglich in einer neuen Prüfformel, ggf. einer temporallogischen Formel, ausgedrückt und in das Überprüfungsverfahren, ggf. ein Modelchecking-Verfahren, eingespeist werden muss. Hierzu ist im Gegensatz zu Verfahren gemäß dem Stand der Technik nicht die Entwicklung eines neuen Suchalgorithmus oder die erneute Veränderung oder Vorbereitung eines bestehenden Suchalgorithmus, etwa durch erneutes Kompilieren, erforderlich.

Unter Anwendung eines erfindungsgemäßen Verfahrens kann eine Überprüfung von Bedienkriterien an einer multimodalen Bedienstruktur somit gegenüber dem Stand der Technik wesentlich einfacher und flexibler erfolgen.

Die Erfindung geht für den Fachmann insbesondere deshalb nicht in naheliegender Weise aus dem Stand der Technik hervor, da für ein erfindungsgemäßes Verfahren gegenüber einem Verfahren gemäß dem Stand der Technik zunächst in der Regel ein erhöhter Aufwand bezüglich der Erstellung eines logischen Modells der Bedienstruktur zu betreiben ist. Dieser erhöhte Aufwand kann entweder dadurch begründet sein, dass anstatt eines transitionsbasierten Zustandsautomaten ein nicht transitionsbasierter Zustandsautomat erstellt wird, wobei die Erstellung des Letzteren wegen dessen großer Anzahl von Zuständen in der Regel aufwändiger ist, oder er kann dadurch begründet sein, dass aus einem bereits vorhandenen transitionsbasierten Zustandsautomaten ein nicht transitionsbasierter Zustandsautomat zu erstellen ist.

Hierzu ist jedoch anzumerken, dass die Erstellung eines nicht transitionsbasierten Zustandsautomat aus einem bereits vorhandenen transitionsbasierten Zustandsautomaten in der Regel in an sich bekannter Weise automatisiert erfolgen kann.

Der zwischenzeitliche Mehraufwand wird jedoch dadurch belohnt, dass die auf die Erstellung des logischen Modells der Bedienstruktur folgende Überprüfung von Bedienkriterien wesentlich vereinfacht und flexibilisiert wird. Die Komplexität des Verfahrens wird erfindungsgemäß also gegenüber Verfahren gemäß dem Stand der Technik von der Überprüfung der Bedienkriterien hin zur Erstellung des Zustandsautomaten verlagert.

Beispielsweise ist die Erstellung eines auf Kripke-Strukturen basierenden Zustandsautomaten in der Regel mit einem gewissen Mehraufwand gegenüber der Erstellung eines entsprechenden transitionsbasierten Zustandsautomaten verbunden. Dieser Mehraufwand muss jedoch für eine bestimmte Bedienstruktur lediglich ein einziges Mal betrieben werden und fällt insbesondere dann äußerst gering aus, wenn die Umformung automatisiert erfolgt. Das Einbringen von Bedienkriterien in der Form temporallogischer Formeln in ein erfindungsgemäßes Verfahren oder die Veränderung von Bedienkriterien ist dann jedoch mit sehr geringer Komplexität behaftet und kann gegebenenfalls auch leicht schrittweise oder nachträglich erfolgen.

Ein zur beschriebenen Erfindung vergleichbares Verfahren ist aus dem Bereich der Überprüfung multimodaler Bedienschnittstellen, insbesondere menübasierter multimodaler Bedienschnittstellen, nicht bekannt. Gemäß dem Stand der Technik wird Modelchecking unter der Verwendung von Kripke-Strukturen und temporallogischen Formeln überwiegend zur Überprüfung von Hardware-Schaltungen eingesetzt. Die wenigen bekannten Anwendungen zur Überprüfung von Software beziehen sich auf die Verifikation von Protokollen und grafischen Benutzeroberflächen, welche weder auf einer Menüstruktur basieren noch die Bedienung durch mehrere Eingabemodalitäten unterstützen. Eine Übertragung des Prinzips auf die vorliegende Erfindung ist somit nicht durch gemäß dem Stand der Technik bestehende Verfahren nahegelegt.

Weitere Einzelheiten der Erfindung ergeben sich aus der nachstehenden Beschreibung und den beigefügten Zeichnungen, durch welche eine bevorzugte Ausführungsform der Erfindung beispielhaft veranschaulicht wird. In den Zeichnungen zeigen

Fig. 1 einen transitionsbasierten Zustandsautomaten als logisches Modell einer menübasierten Bedienstruktur,

Fig. 2 eine Kripke-Struktur als logisches Modell einer menübasierten Bedienstruktur.

Die Bedienstruktur eines Kontrollsystems mit multimodaler Bedienschnittstelle in einem Kraftfahrzeug ist durch ein erfindungsgemäßes Verfahren hinsichtlich mehrerer Bedienkriterien zu überprüfen. Zunächst ist nur eines der Bedienkriterien bekannt.

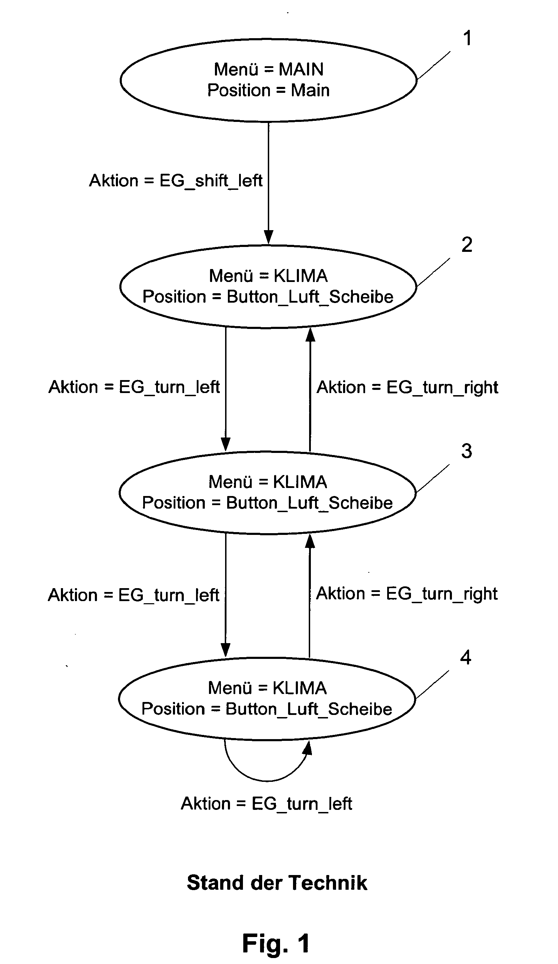

Als logisches Modell der Bedienstruktur ist der in Fig. 1 dargestellte transitionsbasierte Zustandsautomat bekannt. Der Zustandsautomat in Fig. 1 entspricht einem in Verfahren gemäß dem Stand der Technik verwendeten Zustandsautomaten und dient hier als Ausgangsbasis für die Beschreibung eines erfindungsgemäßen Verfahrens.

Zustandsübergänge zwischen den Zuständen 1,2,3,4 des Zustandsautomaten sind durch die in Fig. 1 als mit Transitionsbedingungen behaftete Transitionspfeile eingezeichneten Transitionen möglich. Ein Zustandsübergang von einem Zustand, z. B. Zustand 1, zu einem mit diesem Zustand über einen Transitionspfeil verbundenen Zustand, z. B. Zustand 2, erfolgt dann, wenn die zugehörige Transitionsbedingung, z. B. "Aktion = EG_shift_left" (Verschieben der Handhabe eines Ergocommanders, der Teil der multimodalen Bedienschnittstelle ist, nach links) zwischen den Zuständen 1 und 2 erfüllt ist. Der transitionsbasierte Zustandsautomat in Fig. 1 zeigt der Einfachheit halber nur einen Teil der Zustände der realen Bedienstruktur, nur einen Teil der zwischen den dargestellten Zuständen möglichen Transitionen sowie keine Transitionen zwischen dargestellten Zuständen und nicht dargestellten Zuständen.

Dargestellt sind die folgenden Transitionen:

Die Aktion EG_shift_left (Verschieben der Handhabe des Ergocommanders nach links) führt zu einem Übergang vom Zustand mit den Parametern Menü MAIN, Position Main zum Zustand mit den Parametern Menü KLIMA, Position Button_Luft_Scheibe (Luftzufuhr auf Scheibe gerichtet).

Die Aktion EG_turn_left (Drehen der Handhabe nach links) führt zu einem Übergang vom Zustand Menü KLIMA, Position Button_Luft_Scheibe zum Zustand Menü KLIMA, Position Button_Luft_Fahrer (Luftzufuhr auf Fahrer gerichtet).

Die Aktion EG_turn_left führt zu einem Übergang vom Zustand Menü KLIMA, Position Button_Luft_Fahrer zum Zustand Menü KLIMA, Position Button_Luft_Fuß (Luftzufuhr auf Fußraum gerichtet).

Die Aktion EG_turn_left führt ausgehend vom Zustand Menü KLIMA, Position Button_Luft_Fuß zu keiner Veränderung des Zustands.

Die Aktion EG_turn_right (Drehen der Handhabe nach rechts) führt zu einem Übergang vom Zustand Menü KLIMA, Position Button_Luft_Fuß zum Zustand Menü KLIMA, Position Button_Luft_Fahrer.

Die Aktion EG_turn_right führt zu einem Übergang vom Zustand Menü KLIMA, Position Button_Luft_Fahrer zum Zustand Menü KLIMA, Position Button_Luft_Scheibe.

Gemäß einer hier beschriebenen bevorzugten Ausführungsform der Erfindung wird der transitionsbasierte Zustandsautomat nun unter Annahme von für die Überprüfung der Bedienbarkeit der Bedienstruktur relevanten Abfolgen von Bedienschritten in einen auf Kripke-Strukturen basierenden Zustandsautomaten umgesetzt. Zur Vereinfachung des Ausführungsbeispiels wird als einzige für die Überprüfung der Bedienbarkeit der Bedienstruktur relevante Abfolge von Bedienschritten vorausgesetzt:

> Start: Menü MAIN, Position Main
> Bedienschritt 1: EG_shift_left
> Bedienschritt 2: EG_turn_left
> Bedienschritt 3: EG_turn_left
> Bedienschritt 4: EG_turn_left
> Bedienschritt 5: EG_turn_right
> Bedienschritt 6: EG_turn_right
> Bedienschritt 7 ff.: optional Wiederholung ab Bedienschritt 2

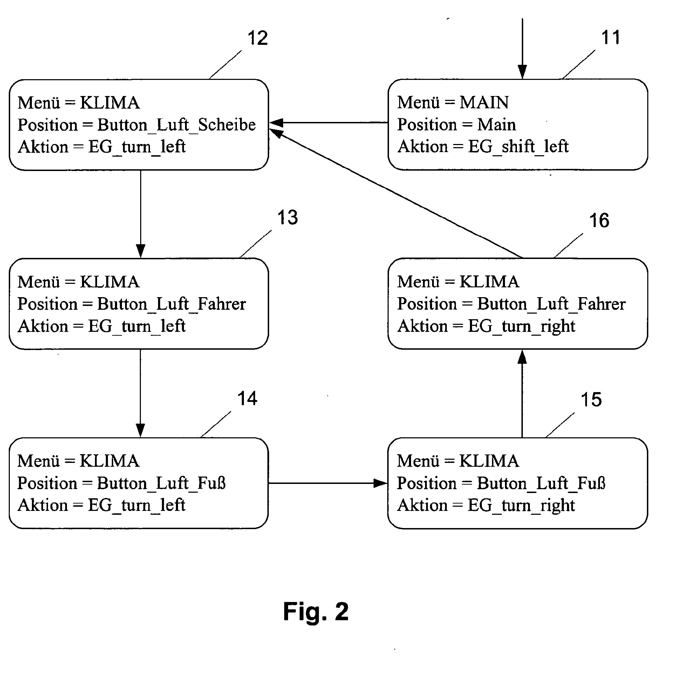

Da nur eine einzige Abfolge von Bedienschritten betrachtet wird, ergibt sich eine einfache Kripke-Struktur, dargestellt in Fig. 2, als Ergebnis der Umformung. Die Kripke-Struktur in Fig. 2 beschreibt dementsprechend die folgende Abfolge von Zuständen und Bedienschritten:
Start im Menü MAIN, Position Main.
Bedienschritt 1: EG_shift_left führt zu Übergang ins Menü KLIMA, Position Button_Luft_Scheibe.
Bedienschritt 2: EG_turn_left führt innerhalb Menü KLIMA zu Übergang zur Position Button_Luft_Fahrer.
Bedienschritt 3: EG_turn_left führt innerhalb Menü KLIMA zu Übergang zur Position Button_Luft_Fuß.
Bedienschritt 4: EG_turn_left führt zu keiner Veränderung des Menüs oder der Position.
Bedienschritt 5: EG_turn_right führt innerhalb Menü KLIMA zu Übergang zur Position Button_Luft_Fahrer.
Bedienschritt 6: EG_turn_right führt innerhalb Menü KLIMA zu Übergang zur Position Button_Luft_Scheibe.
Bedienschritt 7 ff.: optional Wiederholung ab Bedienschritt 2
Bei Betrachtung weiterer Abfolgen von Bedienschritten würden sich weitere Kripke-Strukturen als Teilautomaten des erfindungsgemäß verwendeten Zustandsautomaten ergeben. Eine solche Betrachtung wäre in analoger Weise durchführbar und wird hier der Einfachheit halber nicht näher beschrieben oder bebildert.
Den Zuständen 11,12,13,14,15,16 der Kripke-Struktur aus Fig. 2 ist im Gegensatz zum transitionsbasierten Zustandsautomaten aus Fig. 1 jeweils der Bedienschritt als Parameter zugeordnet, der ausgeführt wird, um ausgehend vom entsprechenden Zustand zum jeweiligen Nachfolgezustand zu gelangen. Dementsprechend enthält beispielsweise der Zustand 11 die Parameter Menü = MAIN, Position = Main, Aktion = EG_shift_left.
Die erstellte Kripke-Struktur lässt sich nun unter Verwendung eines Modelchecking-Verfahrens (z.B. SMV [Symbolic Model Verifier]) sehr einfach hinsichtlich diverser Bedienkriterien überprüfen. Die Kripke-Struktur wird hierzu an das Modelchecking-Verfahren übergeben.
Zunächst ist ein erstes Bedienkriterium zu überprüfen: "Ist der ‚Luft-zum-Fußraum-Button' im Menü KLIMA erreichbar?" Das erste Bedienkriterium wird hierzu in der Syntax und Semantik einer temporallogischen Formel ausgedrückt. Die entsprechende erste temporallogische Formel für das erste Bedienkriterium lautet: EF (Menü = KLIMA ^ Position = Button_Luft_Fuß)
Die erste temporallogische Formel wird an das Modelchecking-Verfahren übergeben. Dieses liefert, unter der Voraussetzung korrekter Funktion des Verfahrens, als Antwort die Aussage, dass das erste Bedienkriterium erfüllt ist.
Erst zu einem späteren Zeitpunkt im Entwicklungsprozess steht ein zweites zu überprüfendes Bedienkriterium fest: "Kann man nach Verlassen des Menüs MAIN wieder zurück ins Menü MAIN gelangen?" Das zweite Bedienkriterium wird erfindungsgemäß ebenfalls als temporallogische Formel ausgedrückt. Die entsprechende zweite temporallogische Formel für das zweite Bedienkriterium lautet:

$$EF(EX(\text{Menü} = \text{MAIN}) \land \text{Menü} = \text{MAIN})$$

Die zweite temporallogische Formel wird ebenfalls an das Modelchecking-Verfahren übergeben. Dieses liefert, wiederum unter der Voraussetzung korrekter Funktion des Verfahrens, als Antwort die Aussage, dass das zweite Bedienkriterium nicht erfüllt ist.
Gegenüber Verfahren gemäß dem Stand der Technik bietet ein erfindungsgemäßes Verfahren im beschriebenen Ausführungsbeispiel den wesentlichen Vorteil, dass das zweite Bedienkriterium mit äußerst geringem Aufwand nachträglich in einen Katalog zu überprüfender Bedienkriterien (hier nur aus 2 Bedienkriterien bestehend) aufgenommen werden kann. Hierzu muss lediglich die entsprechende temporallogische Formel entwickelt und an das Überprüfungsverfahren zur automatisierten Überprüfung übergeben werden.
Unter Anwendung eines Verfahrens gemäß dem Stand der Technik müsste der transitionsbasierte Zustandsautomat gemäß Fig. 1 oder die Kripke-Struktur aus Fig. 2 entweder manuell hinsichtlich des Bedienkriteriums überprüft werden oder es müsste zum Zweck der automatisierten Überprüfung ein entsprechender kriterienspezifischer Suchalgorithmus entwickelt und programmiert werden.
Veränderungen eines solchen kriterienspezifischen Suchalgorithmus erfordern in der Regel zumindest die Wiederholung vorbereitender Maßnahmen, etwa ein erneutes Kompilieren des Suchalgorithmus. Verfahren gemäß dem Stand der Technik sind in der Praxis, insbesondere bei umfangreichen Katalogen von Bedienkriterien und bei komplexen Bedienstrukturen, mit einem wesentlich höheren Aufwand verbunden als ein erfindungsgemäßes Verfahren.

Zudem bietet die Anwendung der heute durch deren verbreitete Anwendung auf anderen technischen Gebieten weit entwickelten Verfahren der Temporallogik und des Modelchecking den Vorteil einer äußerst zuverlässigen, effizienten und schnellen Überprüfung von Bedienkriterien, woraus sich für ein erfindungsgemäßes Verfahren auch bei der Überprüfung einzelner Bedienkriterien ein Vorsprung hinsichtlich der Zuverlässigkeit und/oder der zur Durchführung benötigten Rechenzeit und Rechenleistung gegenüber einem Verfahren gemäß dem Stand der Technik ergibt.

Das obige Ausführungsbeispiel zeigt die Anwendbarkeit von Temporallogik und Modelchecking auf die vorliegende Aufgabenstellung lediglich anhand zweier einfacher Bedienkriterien. Ergänzend sei hinzugefügt, dass jedoch die Mehrzahl typischer Bedienkriterien für typische multimodale Bedienstrukturen, insbesondere für die Bedienstruktur eines zentralen Kontrollsystems mit multimodaler Bedienschnittstelle in einem Kraftfahrzeug, sich mit geringem Aufwand in temporallogische Formeln umformen lassen.

Hierzu gehören Kriterien wie:

- Maximale Schrittzahl bis zu einer Funktion (z. B.: "Kann man ausgehend von einem beliebigen Zustand in 3 Bedienschritten die Heizung der Heckscheibe aktivieren bzw. deaktivieren?")

- Elementanzahl bei der Darstellung auf einem Bildschirm (z. B.: "Sind auf dem Bildschirm in irgendeinem Zustand mehr als 20 Elemente sichtbar?")

- Belegtheit einer Aktion (z. B.: "Ist die Aktion ‚Nach rechts drücken' für mindestens einen Zustandsübergang der Bedienstruktur erforderlich?")

- Ablenkungsgrad einer Abfolge von Bedienschritten

Die Mehrzahl solcher Kriterien erfordert, wie bereits erwähnt, die Zuordnung weiterer Parameter (z. B. Ablenkungsgrad eines einzelnen Bedienschrittes) zu den Zuständen des im Überprüfungsverfahren verwendeten Zustandsautomaten.

**Patentansprüche**

1. Verfahren zur automatisierten Überprüfung der Bedienbarkeit einer multimodalen Bedienstruktur auf die Erfüllung vorgegebener Bedienkriterien, mit den Schritten:

    - Abbilden der multimodalen Bedienstruktur in einen durch ein computerimplementiertes Überprüfungsverfahren verarbeitbaren endlichen Zustandsautomaten und Übergeben des Zustandsautomaten an das Überprüfungsverfahren;

    - Ausdrücken der Bedienkriterien als durch das computerimplementierte Überprüfungsverfahren verarbeitbare Prüfformeln und Übergeben der Prüfformeln an das Überprüfungsverfahren,

    bei welchem die multimodale Bedienstruktur in einen nicht transitionsbasierten Zustandsautomaten abgebildet wird, welcher eine Vielzahl von Teilautomaten umfasst, welche jeweils zumindest eine für die Überprüfung der Bedienbarkeit der Bedienstruktur relevante Abfolge von Bedienschritten abbilden.

2. Verfahren nach Anspruch 1, **dadurch gekennzeichnet,** **dass** der nicht transitionsbasierte Zustandsautomat der multimodalen Bedienstruktur automatisiert aus einem transitionsbasierten Zustandsautomaten der multimodalen Bedienstruktur erzeugt wird.

3. Verfahren nach einem der Ansprüche 1 oder 2, **dadurch gekennzeichnet,** **dass** die multimodale Bedienstruktur in einen Zustandsautomaten abgebildet wird, bei welchem jeder Zustand des Zustandsautomaten anhand ihm zugeordneter Parameter eindeutig einem Zustand der multimodalen Bedienstruktur zuordenbar ist.

4. Verfahren nach Anspruch 3, **dadurch gekennzeichnet,** **dass** als Parameter eines Zustands des Zustandsautomaten weitere Informationen zu dem diesem Zustand zugeordneten Zustand der multimodalen Bedienstruktur oder einem zum Erreichen dieses Zustands oder eines Nachfolgezustands ausgeführten Bedienschritt abgelegt werden.

5. Verfahren nach einem der Ansprüche 1 bis 4, **dadurch gekennzeichnet,** **dass** die multimodale Bedienstruktur in eine so genannte Kripke-Struktur oder einen auf Kripke-Strukturen basierenden Zustandsautomaten abgebildet wird.

6. Verfahren nach einem der Ansprüche 1 bis 5, **dadurch gekennzeichnet,** **dass** als computerimplementiertes Überprüfungsverfahren ein so genanntes Modelchecking-Verfahren herangezogen wird.

7. Verfahren nach einem der Ansprüche 1 bis 6, **dadurch gekennzeichnet,** **dass** die Bedienkriterien als so genannte temporallogische Formeln ausgedrückt werden.

8. Verfahren nach einem der Ansprüche 1 bis 7, **dadurch gekennzeichnet,** **dass** es sich bei der multimodalen Bedienstruktur um die Bedienstruktur eines zentralen Kontrollsystems mit menübasierter multimodaler Bedienschnittstelle in einem Kraftfahrzeug handelt.

Menü = MAIN
Position = Main

Aktion = EG_shift_left

Menü = KLIMA
Position = Button_Luft_Scheibe

Aktion = EG_turn_left

Aktion = EG_turn_right

Menü = KLIMA
Position = Button_Luft_Scheibe

Aktion = EG_turn_left

Aktion = EG_turn_right

Menü = KLIMA
Position = Button_Luft_Scheibe

Aktion = EG_turn_left

**Stand der Technik**

**Fig. 1**

12

11

| Menü = KLIMA<br>Position = Button_Luft_Scheibe<br>Aktion = EG_turn_left | Menü = MAIN<br>Position = Main<br>Aktion = EG_shift_left |

13

16

| Menü = KLIMA<br>Position = Button_Luft_Fahrer<br>Aktion = EG_turn_left | Menü = KLIMA<br>Position = Button_Luft_Fahrer<br>Aktion = EG_turn_right |

14

15

| Menü = KLIMA<br>Position = Button_Luft_Fuß<br>Aktion = EG_turn_left | Menü = KLIMA<br>Position = Button_Luft_Fuß<br>Aktion = EG_turn_right |

**Fig. 2**

10

**Europäisches Patentamt**

# EUROPÄISCHER RECHERCHENBERICHT

Nummer der Anmeldung

EP 05 01 0816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BELLI F AND GULDAH B: "Software testing via model checking" COMPUTER AND INFORMATION SCIENCES - ISCIS 2004. 19TH INTERNATIONAL SYMPOSIUM. PROCEEDINGS, Oktober 2004 (2004-10), Seiten 907-916, XP002399416 Kemer-Antalya, Turkey * das ganze Dokument * ----- | 1-8 | INV. G06F11/36 |
| A | T. LATVALA: "Efficient model checking of safety properties" PROCEEDINGS OF THE 10TH SPIN WORKSHOP ON MODEL CHECKING OF SOFTWARE (SPIN 2003), Bd. LNCS2648, 2003, Seiten 74-88, XP002399437 * das ganze Dokument * ----- | 1-8 | |

| RECHERCHIERTE SACHGEBIETE (IPC) |
|---|
| G06F |

Der vorliegende Recherchenbericht wurde für alle Patentansprüche erstellt

| Recherchenort | Abschlußdatum der Recherche | Prüfer |
|---|---|---|
| Den Haag | 20. September 2006 | Renault, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CLARKE ; GRUMBERG ; PELED.** Model Checking. MIT Press, 2001